# EUROPEAN PATENT APPLICATION

(11) **EP 3 486 072 A1**
(43) Date of publication of application: **22.05.2019**
(21) Application number: 17201936.6
(22) Date of filing: 15.11.2017
(51) Int. Cl.: B29C 64/393, B29C 64/135, B29C 64/153, B29C 64/268, B33Y 10/00, B33Y 30/00, B33Y 50/02

(54) **METHOD FOR ADDITIVELY MANUFACTURING THREE-DIMENSIONAL OBJECTS**

(71) Applicant: CL Schutzrechtsverwaltungs GmbH, 96215 Lichtenfels (DE)
(72) Inventor: Hertel, Kai, 96149 Breitengüßbach (DE)
(74) Representative: Hafner & Kohl

(57) **Abstract**

Method for additively manufacturing at least one three-dimensional object (2) by means of successive layerwise selective irradiation and consolidation of build material layers by means of at least one energy beam (4), whereby each build material layer comprises at least one irradiation area (IA) which is to be selectively irradiated and thereby, selectively consolidated during the additive build-up of the three-dimensional object (2) to be additively manufactured, the irradiation area (IA) being subdivided into a number of irradiation sub-areas (ISA), **wherein** at least one irradiation sub-area (ISA) having the shape of a polygon, the polygon having at least five sides.

## Description

The invention relates to a method for additively manufacturing at least one three-dimensional object by means of successive layerwise selective irradiation and consolidation of build material layers by means of at least one energy beam, whereby each build material layer comprises at least one area which is to be selectively irradiated and thereby, selectively consolidated during the additive build-up of the three-dimensional object to be additively manufactured, the area being subdivided into a number of irradiation sub-areas.

Respective methods for additively manufacturing three-dimensional objects, e.g. technical components, are generally known form prior art. Respective methods comprise the successive layerwise selective irradiation and consolidation of build material layers by means of at least one energy beam. Each build material layer comprises at least one area which is to be selectively irradiated and thereby, selectively consolidated during the additive build-up of the three-dimensional object to be additively manufactured. Respective methods may be implemented as selective laser melting processes, for instance.

The at least one area of a respective build material layer which is to be selectively irradiated and thereby, selectively consolidated during the additive build-up of the three-dimensional object to be additively manufactured is typically subdivided into a number of irradiation sub-areas which irradiation sub-areas may be separately irradiated. Subdividing the area into respective irradiation sub-areas and sequencing irradiating respective irradiation sub-areas is typically pre-defined in a so called "irradiation strategy". Known irradiation strategies typically implement subdividing a respective area into squares or stripes, respectively.

As irradiation strategies represent an important measure for controlling the structural properties of the three-dimensional object to be additively manufactured, particularly since respective irradiation strategies strongly affect the thermal properties of the build material layers during the additive build-up of the three-dimensional object to be additively manufactured, there exists a steady need for further elaborated irradiation strategies.

It is the object of the invention to provide a method for additively manufacturing three-dimensional objects implementing an irradiation strategy allowing for further improved structural properties of a three-dimensional object to be additively manufactured.

This object is achieved by a method for additively manufacturing three-dimensional objects according to Claim 1. The claims depending on Claim 1 relate to possible embodiments of the method according to Claim 1.

The method described herein is a method (hereinafter "method") for additively manufacturing at least one three-dimensional object by means of successive layerwise selective irradiation and consolidation of build material layers by means of at least one energy beam. Respective build material layers may be layers of a build material powder. A respective build material powder may comprise at least one of a metal powder, a ceramic powder, or a polymer powder, for instance. A respective energy beam may be an electron beam or a laser beam, for instance. The method may thus, be implemented as a selective electron beam melting process or a selective laser melting process, for instance.

The method may be implemented by means of an apparatus (hereinafter "apparatus") for additively manufacturing three-dimensional objects, e.g. technical components, by means of successive layerwise selective irradiation and consolidation of build material layers which can be consolidated by means of at least one energy beam. As mentioned above, respective build material layers may be layers of a build material powder. The build material powder may comprise at least one of a metal powder, a ceramic powder, or a polymer powder, for instance. A respective energy beam may be an electron beam or a laser beam, for instance. The apparatus may thus, be implemented as a selective electron beam melting apparatus or a selective laser melting apparatus, for instance.

According to the method, each build material layer comprises at least one area (hereinafter "irradiation area") which is to be selectively irradiated and thereby, selectively consolidated during the additive build-up of the three-dimensional object to be additively manufactured. Respective irradiation areas which are to be selectively irradiated and thereby, selectively consolidated during the additive build-up of the three-dimensional object are defined on basis of the geometry, i.e. particularly the cross-section, of the three-dimensional object which is to be additively manufactured. Hence, each irradiation area defines the geometry, particularly the cross-section, of a three-dimensional object which is to be additively manufactured and vice versa.

Respective irradiation areas which are to be selectively irradiated and thereby, selectively consolidated during the additive build-up of the three-dimensional object to be additively manufactured are determined by a control unit, e.g. a control computer. The control unit determines respective irradiation areas (for each build material layer) on basis of build data, e.g. slice-data, representing the geometry, particularly the cross-section, of the three-dimensional object which is to be additively manufactured. A respective control unit may be a functional unit of an irradiation unit of an apparatus implementing the method.

According to the method, respective irradiation areas which are to be selectively irradiated and thereby, selectively consolidated during the additive build-up of the three-dimensional object to be additively manufactured are subdivided into a number of irradiation sub-areas. The irradiation sub-areas may be separately irradiated according to a specific sequence. Subdividing respective irradiation areas into respective irradiation sub-areas and sequencing irradiating respective irradiation sub-areas is typically pre-defined by an irradiation strategy. A respective irradiation strategy may be generated by a respective control unit. Diverse user inputs may be considered while generating the irradiation strategy.

According to the method, at least one irradiation sub-area has the shape of a polygon, the polygon having at least five sides. In other words, a single irradiation sub-area, a plurality of irradiation sub-areas, or all irradiation sub-areas of a respective irradiation area of a respective build material layer may have the shape of a polygon having at least five sides and thus, at least five points, i.e. particularly corners, where respective sides intersect. Respective irradiation sub-areas may thus, be formed at least as pentagons. The sum of the internal angles of a respective irradiation sub-area is thus, at least 540°.

It is generally conceivable that first irradiation sub-areas having the shape of a polygon having a first number of sides with the provisio that the number of sides is at least five may be mixed with irradiation sub-areas having a second number (different from the first number) of sides with the provisio that the number of sides is at least five in a respective irradiation area or build material layer, respectively. Hence, differently shaped polygonal irradiation sub-areas each having at least five sides may be used in a respective irradiation area or build material layer, respectively. It is also generally conceivable that irradiation sub-areas having the shape of a polygon having at least five sides may be mixed with irradiation sub-areas having the shape of polygons having less than five sides in a respective irradiation area or build material layer, respectively. Hence, (differently shaped) polygonal irradiation sub-areas each having at least five sides may be used in connection with irradiation sub-areas having less than five sides in a respective irradiation area or build material layer, respectively. As is apparent from this passage, irradiation sub-areas having the shape of a polygon having at least five sides may be arbitrarily mixed with each other and/or irradiation sub-areas of other shapes in at least one respective irradiation area or build material layer, respectively.

It is also possible that, even if respective irradiation sub-areas may have the same basic shape, i.e. a basic shape defined by a polygon having at least five sides, the area of respective irradiation sub-areas may differ. In other words, differently sized polygons each having at least five sides may be used in a (common) irradiation area or in different irradiation areas. As an example, pentagons, hexagons, heptagons, etc. of same or different size and thus, areas may be used.

The method thus suggests using special shapes of respective irradiation sub-areas, which are typically square or striped-shaped according to prior art, by using special polygonal irradiation sub-areas having the shape of a polygon having at least five sides. Sub-dividing a respective irradiation area into respective irradiation sub-areas of a respective polygonal shape can positively affect the structural properties of the three-dimensional object which is to be additively manufactured, particularly due to an improved distribution and dissipation of thermal energy within a respective irradiation area or build material layer, respectively. The improved distribution and dissipation of thermal energy within a respective irradiation area or build material layer may result in improved reduction of thermally induced stresses within the build material layer and therefore, improves the structural properties of the three-dimensional object which is to be additively manufactured.

Thus, an improved method for additively manufacturing three-dimensional objects is provided.

Respective irradiation sub-areas having the shape of a polygon, the polygon having at least five sides, may be irradiated with a number of separate irradiation vectors, particularly scanning vectors, of given spatial extension and/or orientation. Each irradiation vector defines a, typically line-shaped, beam or irradiation path for irradiating the respective irradiation sub-area with an energy beam. Thereby, respective irradiation sub-areas are filled with respective irradiation vectors so as to irradiate and consolidate a respective irradiation sub-area in desired manner.

Respective irradiation vectors and irradiation paths, respectively may be parallelly aligned and thus, may have a parallel arrangement. Parallel irradiation vectors may have an equidistant arrangement relative to each other; in other words, in a parallel arrangement of irradiation vectors, at least three separate irradiation vectors and irradiation paths, respectively may be arranged in an equidistant arrangement.

The irradiation vectors and irradiation paths, respectively of directly adjacently disposed irradiation sub-areas (in a common build material layer) may be offset or rotated relative to each other. Thus, the direction and/or extension and/or orientation of the irradiation vectors used for irradiating a first irradiation sub-area may differ from the direction and/or extension and/or orientation of the irradiation vectors used for irradiating a further irradiation sub-area being directly adjacently disposed to the first irradiation sub-area. In other words, the direction and/or extension and/or orientation of respective irradiation vectors used for irradiation adjacently disposed irradiation sub-areas may differ. Concertedly varying the direction and/or extension and/or orientation of respective irradiation vectors used for irradiation adjacently disposed irradiation sub-areas, e.g. by offsetting or rotating them relative to each other, positively affects the distribution and dissipation of thermal energy in a respective irradiation area and build material layer, respectively.

Thereby, a specific sequence of irradiation of respective irradiation sub-areas in a build material layer may be implemented. The sequence may define that irradiation sub-areas having irradiation vectors of same spatial direction and/or extension and/or orientation are irradiated simultaneously or successively in a common irradiation step. A respective sequence positively affects the distribution and dissipation of thermal energy in a respective irradiation area and build material layer, respectively. Hence, an exemplary sequence may define that in a first irradiation step, all irradiation sub-areas with irradiation vectors having a first spatial direction and/or extension and/or orientation are irradiated and in a subsequent further irradiation step all irradiation sub-areas with irradiation vectors having a further spatial direction and/or extension and/or orientation are irradiated. Hence, the number of irradiation steps may correspond to the number of different spatial directions and/or extensions and/or orientations of irradiation vectors.

Another measure for positively affecting the structural properties of the three-dimensional object which is to be additively manufactured is a (lateral) overlap of irradiation sub-areas within a (common) build material layer. Hence, at least two irradiation sub-areas within a build material layer may at least partially overlap, particularly in border regions of the respective irradiation sub-areas.

Another measure for positively affecting the structural properties of the three-dimensional object which is to be additively manufactured and positively affecting the distribution and dissipation of thermal energy in between different build material layers is a lateral or rotational offset of irradiation sub-areas of different build material layers, particularly of vertically directly adjacently disposed build material layers. Hence, it is possible that the irradiation sub-areas of at least two different build material layers, particularly of vertically directly adjacently disposed build material layers, are laterally offset or rotated relative to each other.

According to a preferred embodiment of the method, the at least one irradiation sub-area has the shape of a hexagon. In other words, a single irradiation sub-area, a plurality of irradiation sub-areas, or all irradiation sub-areas of a respective irradiation area of a respective build material layer may have the shape of a polygon having six sides and thus, at least six points, i.e. particularly corners, where respective sides intersect. Thus, irradiation sub-areas in the shape of hexagons (hexagonal irradiation sub-areas) are preferably used since (at least regular) hexagons can be used to tesselate a two-dimensional space, such as an irradiation area of a build material layer, without leaving gaps.

Although regular hexagons are typically preferred since they can be used to tesselate a two-dimensional space, such as a build material layer, without leaving gaps, generally irregular hexagons are also conceivable. Thus, the at least one irradiation sub-area may generally have the shape of a regular hexagon, i.e. a hexagon having all sides of same length, or an irregular hexagon, i.e. a hexagon having at least two sides of different length.

According to a further preferred embodiment, three directly adjacently disposed irradiation sub-areas each having the shape of a hexagon constitute a unit cell. As each hexagonal irradiation sub-area has six sides, each of the three hexagonal irradiation sub-areas of a respective unit cell coincide or directly contact another directly adjacently disposed hexagonal irradiation sub-area at two sides. Thus, two hexagonal irradiation sub-areas of a respective unit cell are arranged in line with each other, whereby the center points of the two hexagonal sub-areas are connected by a straight line, and the third irradiation sub-area of the unit cell is arranged laterally offset to the two irradiation sub-areas. In either case, the straight connection lines between the center points of the three irradiation sub-areas of a respective unit-cell typically form a(n equilateral) triangle. Constituting respective unit cells increases the efficiency of tessellating a two-dimensional space, such as an irradiation area of a build material layer, without leaving gaps.

As mentioned above, respective irradiation sub-areas having the shape of a polygon having at least five sides may be irradiated with a number of separate irradiation vectors, particularly scanning vectors, of given direction and/or extension and/or orientation. Of course, this also applies to hexagonal irradiation sub-areas. Also in this case, respective irradiation sub-areas are filled with respective irradiation vectors so as to consolidate a respective irradiation sub-area. Respective irradiation vectors and thus, irradiation paths may have a parallel arrangement. Parallel irradiation vectors may have an equidistant arrangement relative to each other.

Referring to the aforementioned preferred embodiment of a unit cell constituted by three directly adjacently disposed irradiation sub-areas each having the shape of a hexagon, the parallel irradiation vectors of directly adjacently disposed hexagonal irradiation sub-areas (in a common build material layer) may be offset or rotated relative to each other. The parallel irradiation vectors of directly adjacently disposed hexagonal irradiation sub-areas may be rotated by 60° relative to each other. Thus, the spatial extension and/or of the irradiation vectors used for irradiating a first hexagonal irradiation sub-area of a specific unit cell may differ from the spatial extension and/or orientation of the irradiation vectors used for irradiating a second hexagonal irradiation sub-area of the unit cell, the second hexagonal irradiation sub-area being directly adjacently disposed to the first hexagonal irradiation sub-area of the unit cell, and from the spatial extension and/or of the irradiation vectors used for irradiating a third hexagonal irradiation sub-area of the unit cell, the third hexagonal irradiation sub-area being directly adjacently disposed to the first and/or second hexagonal irradiation sub-area of the unit cell. In other words, the spatial extension and/or orientation of respective irradiation vectors used for irradiation adjacently disposed hexagonal irradiation sub-areas of a respective unit cell may differ. Concertedly varying the spatial extension and/or orientation of respective irradiation vectors used for irradiation adjacently disposed irradiation sub-areas of a unit cell, e.g. by offsetting or rotating them relative to each other, positively affects the distribution and dissipation of thermal energy in a respective irradiation area and build material layer, respectively.

Thereby, a specific sequence of irradiation of respective hexagonal irradiation sub-areas, particularly of different unit cells, in a build material layer may be implemented. The sequence may define that hexagonal irradiation sub-areas having irradiation vectors of same spatial extension and/or orientation are irradiated simultaneously or successively. A respective sequence positively affects the distribution and dissipation of thermal energy in a respective irradiation area and build material layer, respectively. Hence, an exemplary sequence may define that in a first irradiation step, all hexagonal irradiation sub-areas with irradiation vectors having a first spatial extension and/or orientation are irradiated simultaneously or successively and in a subsequent irradiation step all hexagonal irradiation sub-areas with irradiation vectors having a second spatial extension and/or orientation are irradiated simultaneously or successively. Hence, the number of irradiation steps may depend on the number of different spatial extensions and/or orientation of irradiation vectors. Hence, hexagonal sub-areas having irradiation vectors of corresponding spatial extensions and/or orientations of different unit cells may be irradiated simultaneously or successively in a common irradiation step.

The invention further relates to an irradiation unit for an apparatus for additively manufacturing three-dimensional objects by means of successive layerwise selective irradiation and consolidation of build material layers by means of at least one energy beam. The irradiation unit is adapted to implement the method as described above. The irradiation unit may comprise at least one energy beam generating unit, e.g. an electron or laser source, adapted to generate an energy beam and at least one energy beam deflecting unit, e.g. an arrangement of magnetic or optical elements, particularly mirrors, lenses, etc., adapted to deflect/move an energy beam to specific irradiation areas of a build material layer which is to be selectively irradiated and consolidated. The irradiation unit may comprise or communicate with a control unit for implementing the method. All annotations concerning the method thus, also apply to the irradiation unit.

Moreover, the invention relates to an apparatus for additively manufacturing three-dimensional objects by means of successive layerwise selective irradiation and consolidation of build material layers by means of at least one energy beam), the apparatus comprising at least one irradiation unit as described before. The apparatus is thus, adapted to implement the method. All annotations concerning the method thus, also apply to the apparatus.

The apparatus comprises a number of functional units which are operable during its operation. A first exemplary functional unit may be a build material application unit adapted to apply build material in a build plane of the apparatus so as to form a build material layer which is to be selectively irradiate and consolidated by means of at least one energy beam. Another exemplary functional unit may be an irradiation unit adapted to successively selectively irradiate and consolidate a build material layer applied in the build plane with at least one energy beam, e.g. an electron beam or a laser beam.

The invention furthermore relates to a non-transitory computer readable storage medium storing code representative of at least one irradiation area which is to be selectively irradiated and thereby, selectively consolidated during an additive build-up of a three-dimensional object to be additively manufactured upon execution of the code by a computerized additive manufacturing apparatus, particularly the apparatus according to Claim as specified above, the code comprising: code representing the at least one irradiation area being subdivided into a number of irradiation sub-areas, which irradiation sub-areas may be separately irradiated, wherein at least one irradiation sub-area having the shape of a polygon, the polygon having at least five sides.

Exemplary embodiments of the invention are described with reference to the Fig., whereby:
- Fig. 1: shows a principle drawing of an apparatus for additively manufacturing three-dimensional objects according to an exemplary embodiment; and
- Fig. 2 - 4: each show a top view of an irradiation area according to an exemplary embodiment.

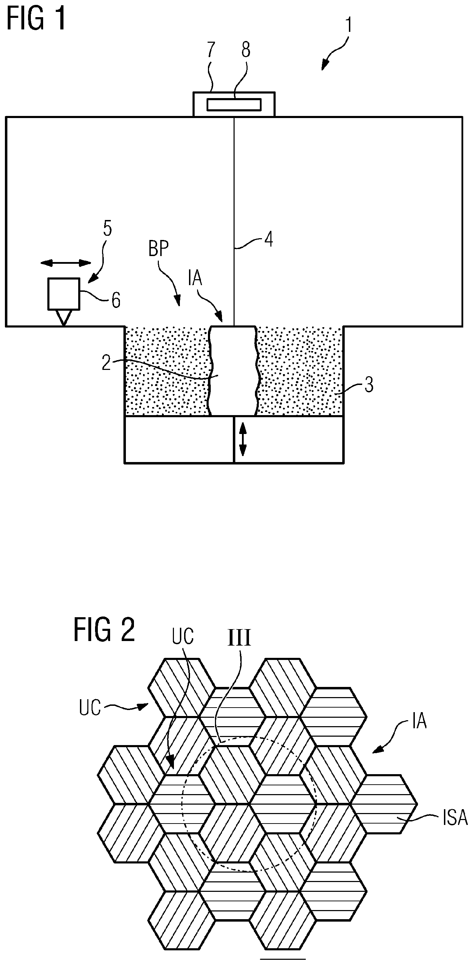

Fig. 1 shows a principle drawing of an apparatus 1 for additively manufacturing three-dimensional objects 2, e.g. technical components, by means of successive layerwise selective irradiation and accompanying consolidation of layers of a powdered build material 3, e.g. a metal powder, which can be consolidated by means of at least one energy beam 4, e.g. a laser beam, according to an exemplary embodiment. The apparatus 1 can be a selective laser melting apparatus, for instance.

The apparatus 1 comprises a number of functional units which are operable during its operation. Each functional device may comprise a number of functional units. Operation of the functional devices and the apparatus 1, respectively is controlled by a central control device (not depicted).

A first exemplary functional device is a build material application device 5 e.g. a re-coating device, adapted to successively apply layers of build material 3 which are to be successively selectively irradiated and consolidated during operation of the apparatus 1 in the build plane BP of the apparatus 1. As indicated by the horizontal double-arrow, the build material application device 5 comprises a moveably supported build material application element 6, e.g. a re-coating element, particularly a re-coating blade.

Another exemplary functional device is an irradiation device 7 adapted to successively selectively irradiate and consolidate respective layers of build material 3 applied in the build plane BP with the at least one energy beam 4. The irradiation device 7 comprises a control unit 8 which is adapted to generate and/or implement a specific irradiation strategy.

The apparatus 1 is adapted to implement a method for additively manufacturing three-dimensional objects 2 by means of successive layerwise selective irradiation and consolidation of build material layers by means of at least one energy beam 4.

According to the method, each build material layer comprises at least one irradiation area IA which is to be selectively irradiated and thereby, selectively consolidated during the additive build-up of the three-dimensional object 2 to be additively manufactured. Respective irradiation areas IA are defined on basis of the geometry, i.e. particularly the cross-section, of the three-dimensional object 2 which is to be additively manufactured. Hence, each irradiation area IA defines the geometry, particularly the cross-section, of a three-dimensional object 2 which is to be additively manufactured and vice versa.

Respective irradiation areas IA may be determined by the control unit 8 of the irradiation unit 7 or another control unit (not shown) of the apparatus 1. The control unit 8 determines respective irradiation areas IA (for each build material layer) on basis of build data, e.g. slice-data, representing the geometry, particularly the cross-section, of the three-dimensional object 2 which is to be additively manufactured.

As is apparent from Fig. 2 - 4, whereby Fig. 2 - 4 each show a top view of an irradiation area IA within the build plane BP of the apparatus 1 according to an exemplary embodiment, a respective irradiation area IA is subdivided into a number of irradiation sub-areas ISA. The irradiation sub-areas ISA may be separately irradiated according to a specific sequence. Subdividing respective irradiation areas IA into respective irradiation sub-areas ISA and sequencing irradiating respective irradiation sub-areas ISA is typically pre-defined by an irradiation strategy.

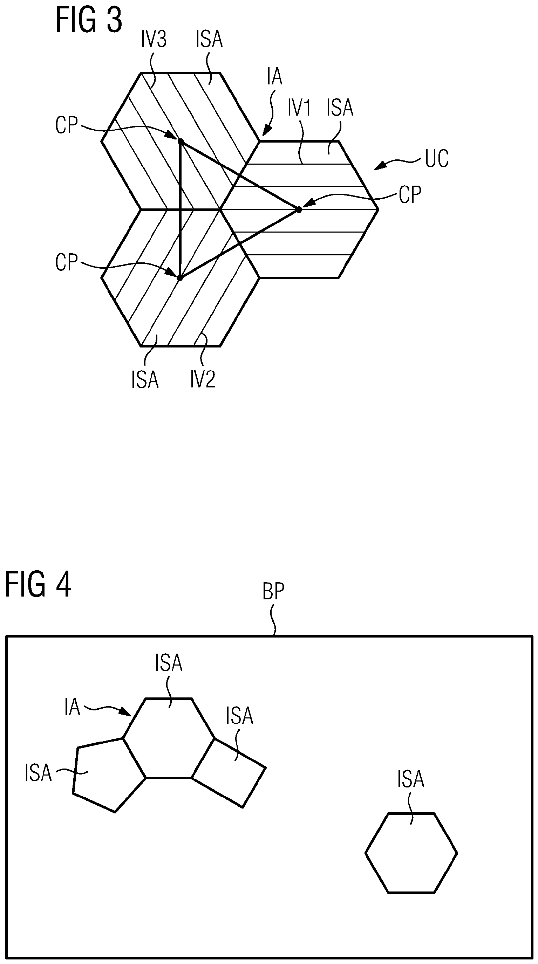

As is apparent from Fig. 2, 3, whereby Fig. 3 is an enlarged view of the detail III of Fig. 2, the irradiation sub-areas ISA each have a hexagonal shape. In other words, the irradiation sub-areas ISA each have the shape of a polygon having six sides.

As is apparent from Fig. 2, 3, three directly adjacently disposed hexagonal irradiation sub-areas ISA constitute a unit cell UC. Fig. 3 shows a detailed view of a respective unit cell UC. As each hexagonal irradiation sub-area ISA has six sides, each of the three hexagonal irradiation sub-areas ISA of a respective unit cell UC coincide or directly contact another directly adjacently disposed hexagonal irradiation sub-area ISA at two sides (see Fig. 3). Thus, two hexagonal irradiation sub-areas ISA of a respective unit cell UC are arranged in line with each other, whereby the center points CP of the two hexagonal sub-areas ISA are connected by a straight line, and the third irradiation sub-area ISA of the unit cell UC is arranged laterally offset to the two irradiation sub-areas ISA. In either case, the straight connection lines between the center points CP of the three irradiation sub-areas of a respective unit-cell UC form a(n equilateral) triangle (see Fig. 3).

Respective irradiation sub-areas ISA may be irradiated with a number of separate irradiation vectors IV, particularly scanning vectors, of given direction and/or extension and/or orientation. As is apparent from Fig. 2, 3 respective irradiation sub-areas ISA are filled with respective irradiation vectors IV so as to consolidate a respective irradiation sub-area ISA. Each irradiation vector IV defines a, typically line-shaped, beam or irradiation path for irradiating the respective irradiation sub-area ISA with an energy beam. As is also apparent from Fig. 2, 3, respective irradiation vectors IV may have a parallel equidistant arrangement relative to each other.

Referring to the preferred embodiment of a unit cell UC constituted by three directly adjacently disposed hexagonal irradiation sub-areas ISA as shown in Fig. 2, 3, the parallel irradiation vectors IV of directly adjacently disposed hexagonal irradiation sub-areas ISA may be offset or rotated relative to each other. According to the exemplary embodiment of Fig. 2, 3, the parallel irradiation vectors IV of directly adjacently disposed hexagonal irradiation sub-areas ISA may be rotated by 60° relative to each other. Thus, the spatial extension and/or of the irradiation vectors IV1 used for irradiating a first hexagonal irradiation sub-area ISA of a specific unit cell UC differ from the spatial extension and/or orientation of the irradiation vectors IV2 used for irradiating a second hexagonal irradiation sub-area ISA of the unit cell UC, the second hexagonal irradiation sub-area ISA being directly adjacently disposed to the first hexagonal irradiation sub-area ISA of the unit cell UC, and from the spatial extension and/or of the irradiation vectors IV3 used for irradiating a third hexagonal irradiation sub-area ISA of the unit cell US, the third hexagonal irradiation sub-area ISA being directly adjacently disposed to the first and/or second hexagonal irradiation sub-area ISA of the unit cell UC. In other words, the spatial extension and/or orientation of respective irradiation vectors IV1 - IV3 used for irradiating adjacently disposed hexagonal irradiation sub-areas ISA of the unit cell UC may differ. Concertedly varying the spatial extension and/or orientation of respective irradiation vectors IV1 - IV3 used for irradiation adjacently disposed irradiation sub-areas ISA of a unit cell UC, e.g. by offsetting or rotating them relative to each other, positively affects the distribution and dissipation of thermal energy in a respective irradiation area IA and build material layer, respectively.

Thereby, a specific sequence of irradiation of respective hexagonal irradiation sub-areas ISA, particularly of different unit cells UC, in a build material layer may be implemented. The sequence may define that hexagonal irradiation sub-areas ISA having irradiation vectors IV of same spatial extension and/or orientation are irradiated simultaneously or successively. A respective sequence positively affects the distribution and dissipation of thermal energy in a respective irradiation area IA and build material layer, respectively. Hence, an exemplary sequence may define that in a first irradiation step, all hexagonal irradiation sub-areas ISA with irradiation vectors IV1 having a first spatial extension and/or orientation are irradiated simultaneously or successively, in a subsequent second irradiation step all hexagonal irradiation sub-areas ISA with irradiation vectors IV2 having a second spatial extension and/or orientation are irradiated simultaneously or successively, and in a subsequent third irradiation step all hexagonal irradiation sub-areas ISA with irradiation vectors IV3 having a third spatial extension and/or orientation are irradiated simultaneously or successively. Hence, hexagonal sub-areas ISA having irradiation vectors IV of corresponding spatial extensions and/or orientations of different unit cells UC (see Fig. 2) may be irradiated simultaneously or successively in a common irradiation step.

Fig. 4 shows show a top view of an irradiation area IA within the build plane BP of the apparatus 1 according to another exemplary embodiment. As is apparent from Fig. 4, irradiation sub-areas ISA having other shapes than hexagonal shapes, e.g. pentagonal shapes, may be implemented and combined with e.g. hexagonal irradiation sub-areas ISA.

Fig. 4 serves to explain that according to the method, at least one irradiation sub-area ISA has the shape of a polygon, the polygon having at least five sides. In other words, a single irradiation sub-area ISA, a plurality of irradiation sub-areas ISA, or all irradiation sub-areas ISA of a respective irradiation area IA may have the shape of a polygon having at least five sides.

As is also apparent from Fig. 4, first irradiation sub-areas ISA having the shape of a polygon having a first number of sides with the provisio that the number of sides is at least five may be mixed with irradiation sub-areas ISA having a second number (different from the first number) of sides with the provisio that the number of sides is at least five in a respective irradiation area or build material layer, respectively. Hence, differently shaped polygonal irradiation sub-areas ISA each having at least five sides may be used in a respective irradiation area IA or build material layer, respectively.

As is also apparent from Fig. 4, irradiation sub-areas ISA having the shape of a polygon having at least five sides may be mixed with irradiation sub-areas ISA having the shape of polygons having less than five sides in a respective irradiation area IA or build material layer, respectively. Hence, (differently shaped) polygonal irradiation sub-areas ISA each having at least five sides may be used in connection with irradiation sub-areas ISA having less than five sides in a respective irradiation area IA or build material layer, respectively.

As is also apparent from Fig. 4, irradiation sub-areas ISA having the shape of a polygon having at least five sides may be arbitrarily mixed with each other and/or irradiation sub-areas of other shapes in at least one respective irradiation area or build material layer, respectively.

As is also apparent from Fig. 4, it is also possible that, even if respective irradiation sub-areas ISA may have the same basic shape, i.e. a basic shape defined by a polygon having at least five sides, the area of respective irradiation sub-areas ISA may differ. As a respective example, Fig. 4 shows differently sized hexagonal polygons used in a (common) irradiation area IA.

Although not shown in the Fig., at least two irradiation sub-areas ISA within a build material layer may at least partially overlap, particularly in border regions of the respective irradiation sub-areas ISA. In such a manner, the structural properties of the three-dimensional object 2 which is to be additively manufactured may be positively affected.

Another measure for positively affecting the structural properties of the three-dimensional object 2 which is to be additively manufactured is a lateral or rotational offset of irradiation sub-areas of different build material layers, particularly of vertically directly adjacently disposed build material layers. Hence, it is possible that the irradiation sub-areas ISA of at least two different build material layers, particularly of vertically directly adjacently disposed build material layers, are laterally offset or rotated relative to each other.

The features set out in context with the embodiments of Fig. 2 - 4 may be arbitrarily combined with each other.

## Claims

1. Method for additively manufacturing at least one three-dimensional object (2) by means of successive layerwise selective irradiation and consolidation of build material layers by means of at least one energy beam (4), whereby each build material layer comprises at least one irradiation area (IA) which is to be selectively irradiated and thereby, selectively consolidated during the additive build-up of the three-dimensional object (2) to be additively manufactured, the irradiation area (IA) being subdivided into a number of irradiation sub-areas (ISA), **wherein** at least one irradiation sub-area (ISA) having the shape of a polygon, the polygon having at least five sides.

2. Method according to Claim 1, **wherein** the at least one irradiation sub-area (ISA) has the shape of a hexagon.

3. Method according to Claim 2, **wherein** the at least one irradiation sub-area (ISA) has the shape of a regular or irregular hexagon.

4. Method according to Claim 2 or 3, **wherein** a plurality of respective irradiation sub-areas (ISA) have the shape of a hexagon.

5. Method according to Claim 4, **wherein** three directly adjacently disposed irradiation sub-areas (ISA) having the shape of a hexagon constitute a unit cell (UC).

6. Method according to any of the preceding Claims, **wherein** the at least one irradiation sub-area (ISA) having the shape of a polygon, the polygon having at least five sides, is irradiated with a number of separate irradiation vectors (IV), particularly scanning vectors, of given direction and/or extension and/or orientation.

7. Method according to Claim 6, **wherein** at least two irradiation vectors (IV) are arranged in a parallel arrangement.

8. Method according to Claim 7, **wherein** at least three separate irradiation vectors (IV) are arranged in an equidistant arrangement.

9. Method according to any of Claims 6 - 8, **wherein** the irradiation vectors (IV) of directly adjacently disposed irradiation sub-areas (ISA) are offset or rotated relative to each other.

10. Method according to Claim 9, **wherein** a specific sequence of irradiation of respective irradiation sub-areas (ISA) in a build material layer is used, the sequence defining that irradiation sub-areas (ISA) having irradiation vectors (IV) of same spatial extension and/or orientation are irradiated simultaneously or successively in a common irradiation step.

11. Method according to Claim 10, **wherein** in a first irradiation step, all irradiation sub-areas (ISA) with irradiation vectors (IV) having a first spatial extension and/or orientation are irradiated and in a subsequent irradiation step all irradiation sub-areas (ISA) with irradiation vectors (IV) having a second spatial extension and/or orientation are irradiated.

12. Method according to any of the preceding Claims, **wherein** irradiation sub-areas (ISA) of at least two different build material layers, particularly of directly adjacently disposed build material layers, are laterally offset or rotated relative to each other.

13. Method according to any of the preceding Claims, **wherein** at least two irradiation sub-areas (ISA) within a build material layer at least partially overlap, particularly in border regions of the respective irradiation sub-areas.

14. Irradiation unit (7) for an apparatus (1) for additively manufacturing three-dimensional objects (2) by means of successive layerwise selective irradiation and consolidation of build material layers by means of at least one energy beam (4), the irradiation unit (7) being adapted to implement the method according to any of the preceding Claims.

15. Apparatus (1) for additively manufacturing three-dimensional objects (2) by means of successive layerwise selective irradiation and consolidation of build material layers by means of at least one energy beam (4), the apparatus (1) comprising at least one irradiation unit (7) according to Claim 14.

16. A non-transitory computer readable storage medium storing code representative of at least one irradiation area (IA) which is to be selectively irradiated and thereby, selectively consolidated during an additive build-up of a three-dimensional object (2) to be additively manufactured upon execution of the code by a computerized additive manufacturing apparatus, particularly the apparatus according to Claim 15, the code comprising code representing the at least one irradiation area (IA) being subdivided into a number of irradiation sub-areas (ISA), wherein at least one irradiation sub-area (ISA) having the shape of a polygon, the polygon having at least five sides.
